# EUROPEAN PATENT APPLICATION

(11) **EP 4 759 579 A1**
(43) Date of publication of application: **17.06.2026**
(21) Application number: 25217072.5
(22) Date of filing: 19.11.2025
(51) Int. Cl.: B60H 1/24, B60S 1/54, B60H 1/34

(54) **AN AIR GUIDE ASSEMBLY FOR A DEMISTING SYSTEM OF A VEHICLE AND METHOD THEREOF**

(30) Priority: 12.12.2024 IN 202441098354
(71) Applicant: TVS Motor Company Limited, 600006 Chennai (IN)
(72) Inventor: Shubham, Vasudeo Toke, 600006 Chennai (IN); Gundavarapu, Venkata Suresh Kumar, 600006 Chennai (IN); Manish, Garg, 600006 Chennai (IN); Vivek, Parashar, 600006 Chennai (IN); Darshan, Gowda Arakere Ravishankara, 600006 Chennai (IN); Chermadurai, Sivasubramanian, 600006 Chennai (IN); Raghav, Saxena, 600006 Chennai (IN); Pattabiraman, Venugopala, 600006 Chennai (IN)
(74) Representative: Patentanwaltskanzlei Matschnig & Forsthuber OG

(57) **Abstract**

The present invention relates to a demisting system (200) of a vehicle (100) comprising one or more inlets (201A, 201B), one or more conduits (203A, 203B, 203C), and an air guide assembly (350) to direct an airflow toward the at least one windscreen (101) of the vehicle (100). The air guide assembly (350) comprises a cover body (302) and a guiding unit (300). The cover body (302) comprises one or more conduit portions (303L, 303R) extended to partially cover at least one of the plurality of flow passages (300A) to increase at least one of a speed and a pressure of an airflow through at least one partially covered passage of the plurality of air flow passages (300A).

## Description

### TECHNICAL FIELD

The present invention relates to a demisting system of a vehicle. More particularly but not exclusively the present invention relates to an air guide assembly for a vehicle and a method of demystifying at least one windscreen of the vehicle using the air guide assembly.

### BACKGROUND

During colder weather conditions such as winter or rainy seasons, drivers often experience reduced visibility due to the accumulation of moisture on a windscreen of the vehicle. This phenomenon occurs as a result of a temperature difference between the interior and exterior environment of the vehicle, which leads to condensation forming on a glass surface of the windscreen. Such accumulation of moisture on the windscreen can severely impair the visibility of a user of the vehicle and hinder the navigation of the vehicle safely.

Existing demisting systems are commonly employed to address this issue by distributing warm air across the windscreen to accelerate the evaporation of the moisture. However, conventional systems often struggle to provide an optimal and uniform airflow distribution. As a result, some areas of the windscreen may remain foggy, causing delays in clearing the visibility zone of the vehicle. In critical driving situations, where immediate visibility is necessary, such inefficiencies in demisting process can pose a significant safety risk.

Another challenge faced by vehicle manufacturers is the spatial constraints of a dashboard of the vehicle. Due to limited available space, designing a demisting system that fits within the confines of the interior of the vehicle while still delivering optimal performance is difficult. Conventional demisting systems may rely on suboptimal grill and duct configurations, which do not maximize airflow efficiency, leading to longer demisting times and substandard performance.

In addition to airflow distribution and space limitations, excessive noise generated by high-speed airflow through the ducts and grills of the demisting system is a concern for drivers and passengers. High-velocity air circulation, which is often necessary for rapid demisting, can produce intrusive noise levels, negatively impacting the comfort and quiet environment expected in modern vehicles. This noise can become particularly bothersome during long trips or in vehicles designed for a quiet cabin experience.

Therefore, there exists a need for an improved demisting system that addresses these challenges by providing a more effective and efficient airflow distribution, reducing the time required to clear the windscreen, optimizing the use of limited space within the dashboard, and minimizing the noise generated during operation.

### SUMMARY OF THE INVENTION

The following summary is illustrative only and is not intended to be in any way limiting. In addition to the illustrative aspects, embodiments, and features described below, further aspects, embodiments, and features will become apparent by reference to the drawings and the following detailed description.

The present invention relates to an air guide assembly for a vehicle. The air guide assembly comprises a cover body and a guiding unit. The guiding unit comprises a plurality of vanes and the guiding unit is configured with the cover body to define a plurality of air flow passages between the plurality of vanes and the cover body. The cover body comprises one or more conduit portions extended to partially cover at least one of the plurality of flow passages to increase at least one of a speed and a pressure of an airflow through at least one partially covered passage of the plurality of air flow passages.

The present invention also relates to a demisting system of a vehicle. The demisting system comprises one or more inlets, one or more conduits, and an air guide assembly. The one or more inlets are configured to draw air into the demisting system. The one or more conduits are configured to direct an airflow toward a compartment of the vehicle and at least one windscreen of the vehicle. The air guide assembly to direct the airflow toward the at least one windscreen of the vehicle. The air guide assembly is disposed in a central conduit of the one or more conduits. The air guide comprises a cover body and a plurality of vanes. The air guide assembly comprises a cover body and a guiding unit. The guiding unit comprises a plurality of vanes and the guiding unit is configured with the cover body to define a plurality of air flow passages between the plurality of vanes and the cover body. The cover body comprises one or more conduit portions extended to partially cover at least one of the plurality of flow passages to increase at least one of a speed and a pressure of an airflow through at least one partially covered passage of the plurality of air flow passages.

The present disclosure also relates to a method of demystifying at least one windscreen of a vehicle using a demisting system. The method comprises a plurality of steps. A first step of the plurality of step involves drawing air *via* one or more inlets using one or more blowers of the demisting system. A second step of the plurality of steps involve directing an airflow toward the at least one windscreen *via* a central conduit of one or more conduits of the demisting system. A third step of the plurality of steps involve distributing, the airflow across width of the at least one windscreen using a plurality of vanes of a guiding unit of the demisting system, the plurality of vanes is disposed in a cover body. A fourth step of the plurality of step involves increasing, a speed and a pressure of the airflow toward at least one windscreen using one or more conduit portions of the cover body. A fifth step of the plurality of steps involve demystifying, the at least one windscreen using a predefined angular profile of the plurality of vanes to optimize the airflow.

The present disclosure also relates to a vehicle. The vehicle comprises at least one windscreen and a demisting system. The demisting system is configured to remove a mist accumulated on the at least one windscreen. The demisting system comprises one or more inlets, one or more conduits, and an air guide assembly. The one or more inlets are configured to draw air into the demisting system. The one or more conduits are configured to direct an airflow toward a compartment of the vehicle and at least one windscreen of the vehicle. The air guide assembly to direct the airflow toward the at least one windscreen of the vehicle. The air guide assembly is disposed in a central conduit of the one or more conduits. The air guide comprises a cover body and a plurality of vanes. The air guide assembly comprises a cover body and a guiding unit. The guiding unit comprises a plurality of vanes and the guiding unit is configured with the cover body to define a plurality of air flow passages between the plurality of vanes and the cover body. The cover body comprises one or more conduit portions extended to partially cover at least one of the plurality of flow passages to increase at least one of a speed and a pressure of an airflow through at least one partially covered passage of the plurality of air flow passages.

### BRIEF DESCRIPTION OF THE DRAWINGS

The proposed invention is described with reference to an exemplary embodiment of an air guide assembly for a vehicle, a demisting system for a vehicle and a method of demystifying at least one windscreen of the vehicle using the air guide assembly. The same reference numerals are used throughout the drawings to reference similar features and components. Description of certain details and implementations follow, including a description below, as well as a discussion of other potential embodiments described below, as well as a discussion of other potential embodiments or implementations of the inventive concepts provided below, followed by a more detailed description with reference to the drawings.
**Figure 1** illustrates a top view of an air guide assembly for a demisting system of vehicle as per one embodiment of the present disclosure.
**Figure 2** illustrates a top front perspective view of an air guide assembly for a demisting system of a vehicle as per another embodiment of the present disclosure.
**Figure 3** illustrates a section view of an air guide assembly for a demisting system for a vehicle along an axis A-A as per another embodiment of present disclosure.
**Figure 4** illustrates a top view of a demisting system of a vehicle as per another embodiment of the present disclosure.
**Figure 5** illustrates a method of demystifying at least one windscreen of a vehicle using a demisting system as per another embodiment of the present disclosure.
**Figure 6** illustrates a left-side view of a demisting system of a vehicle disposed below at least one windscreen of the vehicle as per another embodiment of the present disclosure.
**Figure 7** illustrates a side view of a demisting system of a vehicle disposed below at least one windscreen of the vehicle as per another embodiment of the present disclosure.
**Figure 8** illustrates a rear perspective view of a demisting system of a vehicle as per another embodiment of the present disclosure.

### DETAILED DESCRIPTION

While the present invention has been shown and described with reference to the following preferred embodiments, it will be apparent to those skilled in the art that changes in form, connection, and detail may be made therein without departing from the scope of the invention.

This written description uses examples to provide details on the disclosure, including the best mode, and also to enable any person skilled in the art to practice the disclosure, including making and using any devices or systems and performing any incorporated methods. The patentable scope of the disclosure is defined by the claims and may include other examples that occur to those skilled in the art. Such other examples are intended to be within the scope of the claims if they have structural elements that do not differ from the literal language of the claims, or if they include equivalent structural elements with insubstantial differences from the literal language of the claims.

It is to be understood that the aspects of the embodiments are not necessarily limited to the features described herein. Many modifications and variations of the present subject matter are possible in light of the above disclosure.

In the following description, numerous specific details are set forth to provide a thorough understanding of the embodiments. One skilled in the relevant art will recognize, however, that the techniques described herein can be practised without one or more of the specific details, or with other methods, components, materials, etc. In other instances, well-known structures, materials, or operations are not shown or described in detail to avoid obscuring certain aspects.

Various features and embodiments of the present invention here will be discernible from the following further description thereof, set out hereunder. Further "front" and "rear", and "left" and "right" referred to in the ensuing description of the illustrated embodiment refer to front and rear and left and right directions as seen from a rear portion of the vehicle and looking forward. However, it is contemplated that the disclosure in the present invention may be applied to any vehicle without defeating the scope of the present subject matter. The detailed explanation of the constitution of parts other than the present invention which constitutes an essential part has been omitted at suitable places.

In order to address the one or more of the above-mentioned problems, the present disclosure provides an air guide assembly for a vehicle. The air guide assembly comprises a cover body and a guiding unit. The guiding unit comprises a plurality of vanes and the guiding unit is configured with the cover body to define a plurality of air flow passages between the plurality of vanes and the cover body. The cover body comprises one or more conduit portions extended to partially cover at least one of the plurality of flow passages to increase at least one of a speed and a pressure of an airflow through at least one partially covered passage of the plurality of air flow passages.

As per another embodiment of the present disclosure, the cover body is configured to incline the guiding unit at a predefined angle (θ) from at least one windscreen of the vehicle. As per another embodiment of the present disclosure, the plurality of vanes is disposed inside the cover body and each vane of the plurality of vanes is configured at a predefined angle of inclination (θ₁, θ₂, ... θₙ) with respect to a mounting axis of the respective vane. The mounting axis is passing through abutting region between the respective vane and the cover body and orthogonal to base wall of the cover body and the predefined angle of inclination (θ₁, θ₂, ... θₙ) is in a range of 4° to 36°.

As per another embodiment of the present disclosure, the plurality of vanes is configured to direct the airflow toward the at least one windscreen.

As per another embodiment of the present disclosure, the cover body is configured at a predefined angle (θ) with respect to at least one windscreen. The predefined angle (θ) is in a range of 12° to 28°.

As per another embodiment of the present disclosure, the plurality of vanes comprises a predefined angular profile relative to a central axis (Y-Y') of the cover body. The central axis (Y-Y') is configured to pass through the origin of each vane of the plurality of vanes of the guiding unit respectively.

As per another embodiment of the present disclosure, the cover body comprises one or more side portions. The cover body is configured to vary in a width from the one or more side portions toward a central axis (Y-Y) of the guiding member. The cover body and the plurality of vanes are configured to converge the airflow toward one or more edges of the at least one windscreen.

As per another embodiment of the present disclosure, at least one vane of the plurality of vanes is mounted adjacent to the one or more side portions of the cover body and the one or more conduit portions.

As per another embodiment of the present disclosure, the width of the one or more side portions and a width of the cover body along the central axis (Y-Y') are in a ratio of 1:1.8 to 1:2.3.

As per another embodiment of the present disclosure a demisting system of a vehicle is provided. The demisting system comprises one or more inlets, one or more conduits, and an air guide assembly. The one or more inlets are configured to draw air into the demisting system. The one or more conduits are configured to direct an airflow toward a compartment of the vehicle and at least one windscreen of the vehicle. The air guide assembly to direct the airflow toward the at least one windscreen of the vehicle. The air guide assembly is disposed in a central conduit of the one or more conduits. The air guide comprises a cover body and a guiding unit. The air guide assembly comprises a cover body and a guiding unit. The guiding unit comprises a plurality of vanes and the guiding unit is configured with the cover body to define a plurality of air flow passages between the plurality of vanes and the cover body. The cover body comprises one or more conduit portions extended to partially cover at least one of the plurality of flow passages to increase at least one of a speed and a pressure of an airflow through at least one partially covered passage of the plurality of air flow passages. As per another embodiment of the present disclosure, each vane of the plurality of vanes is configured to be adjusted at a predefined angle of inclination (θ₁, θ₂......θₙ) with respect to a mounting axis of each vane of the plurality of vanes. The predefined angle of inclination (θ₁, θ₂......θₙ) is in a range of 4° to 36°.

As per another embodiment of the present disclosure, the air guiding assembly comprises one or more sensors and one or more blowers. The one or more sensors are configured to detect temperature, humidity and fogging on the at least one windscreen of the vehicle. The one or more blowers are configured to draw the air through the one or more inlets and configured to direct the airflow toward the at least one windscreen through the one or more conduits. The demisting system is configured to control a blowing speed of the one or more blowers and configured to adjust the predefined angle of inclination (θ₁, θ₂......θₙ) of each vane of the plurality of vanes based on one or more inputs received from the one or more sensors.

As per another embodiment of the present disclosure, the central conduit is configured to be integrated with one or more airflow outlets to direct the airflow toward the at least one windscreen of the vehicle based on a fogging intensity.

As per another embodiment of the present disclosure, the one or more conduits comprise a modular configuration.

As per another embodiment of the present disclosure, a method of demystifying at least one windscreen of a vehicle using a demisting system is provided. The method comprises a plurality of steps. A first step of the plurality of step involves drawing air *via* one or more inlets using one or more blowers of the demisting system. A second step of the plurality of steps involve directing an airflow toward the at least one windscreen *via* a central conduit of one or more conduits of the demisting system. A third step of the plurality of steps involve distributing, the airflow across width of the at least one windscreen using a plurality of vanes of a guiding member of the demisting system, the plurality of vanes is disposed in a cover body. A fourth step of the plurality of step involves increasing, a speed and a pressure of the airflow toward at least one windscreen using one or more conduit portions of the cover body. A fifth step of the plurality of steps involve demystifying, the at least one windscreen using a predefined angular profile of the plurality of vanes to optimize the airflow.

As per another embodiment of the present disclosure, a sixth step of the plurality of steps involve directing, the airflow toward the at least one windscreen *via* the central conduit at a predefined angle (θ) measured from the at least one windscreen, wherein the predefined angle (θ) is in a range of 12° to 28°.

As per another embodiment of the present disclosure, a seventh step of the plurality of steps involve adjusting a predefined angle of inclination (θ₁, θ₂......θₙ) of the plurality of vanes to direct the airflow toward fog accumulated on the at least one windscreen.

As per another embodiment of the present disclosure, an eight step of the plurality of steps involve detecting temperature, humidity and fogging of the at least one windscreen of the vehicle *via* one or more sensors of the demisting system. A ninth step of the plurality of steps involve directing the airflow toward the at least one windscreen through the one or more conduits using one or more blowers of the demisting system. A tenth step of the plurality of step involve controlling a blowing speed of the one or more blowers and a predefined angle of inclination (θ₁, θ₂......θₙ) of the plurality of vanes based on one or more inputs received from the one or more sensors.

As per another embodiment of the present disclosure, a vehicle is provided. The vehicle comprises at least one windscreen and a demisting system. The demisting system being configured to remove a mist accumulated on the at least one windscreen. The demisting system comprises one or more inlets, one or more conduits, and an air guide assembly. The one or more inlets are configured to draw air into the demisting system. The one or more conduits are configured to direct an airflow toward a compartment of the vehicle and at least one windscreen of the vehicle. The air guide assembly to direct the airflow toward the at least one windscreen of the vehicle. The air guide assembly is disposed in a central conduit of the one or more conduits. The air guide comprises a cover body and a plurality of vanes. The air guide assembly comprises a cover body and a guiding unit. The guiding unit comprises a plurality of vanes and the guiding unit is configured with the cover body to define a plurality of air flow passages between the plurality of vanes and the cover body. The cover body comprises one or more conduit portions extended to partially cover at least one of the plurality of flow passages to increase at least one of a speed and a pressure of an airflow through at least one partially covered passage of the plurality of air flow passages.

The present subject matter is further described with reference to the accompanying figures. It should be noted that the description and figures merely illustrate the principles of the present subject matter. Various configurations may be devised that, although not explicitly described or shown herein, encompass the principles of the present subject matter. Moreover, all statements herein reciting principles, aspects and examples of the present subject matter, as well as specific examples thereof, are intended to encompass equivalents thereof.

The following disclosure is not intended to limit the present disclosure to the precise forms of particular fields of use disclosed. As such, it is contemplated that various alternate embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure.

In the foregoing specification, the disclosure has been described with reference to specific embodiments disclosed herein can be modified or otherwise implemented in various other ways without departing from the scope of the disclosure. Accordingly, this description is to be considered illustrative and is for the purpose of teaching those skilled in the art the manner of making and using various embodiments of the disclosure. It is to be understood that the forms of the disclosure herein shown and described are to be taken as representative embodiments. Equivalent elements, materials processed or steps may be substituted for those representatively illustrated and described herein. Moreover, certain features of the disclosure may be utilized independently of the use of other features, all as would be apparent to one skilled in the art after having the benefit of this description of the disclosure. Expressions such as "including", "comprising", "incorporating", "consisting of", "have", and "is", used to describe and claim the present disclosure are intended to be construed in a non-exclusive manner, namely allowing for items, components, or elements not explicitly described also to be present. Reference to the singular is also to be construed to relate to the plural.

Further, various embodiments disclosed herein are to be taken in the illustrative and explanatory sense and would in no way be construed as limiting the present disclosure. All joinder references (e.g., attached, affixed, coupled, connected, etc.) are only used to aid the reader's understanding of the present invention, and may not create limitations, particularly as to the position orientation, or use of the system and/or methods disclosed herein. Therefore, joinder references, if any, are to be construed broadly. Moreover, such joinder references do not necessarily infer that two elements are directly connected to each other.

Additionally, all numerical terms, such as, but not limited to, "first", "second", "primary", "secondary", "main" or any other ordinary and/or numerical terms, should also be taken as identifiers, to assist the reader's understanding of the various elements, embodiments, variations and/or modifications of the present disclosure, and may not create any limitations, particularly as to the order, or preference, of any element, embodiment, variation, and/or modification relative to, or over, another element, embodiment, variation and/or modification.

It will also be appreciated that one or more of the elements depicted in the drawings/ figures can also be implemented in a more separated or integrated manner, or even removed, or rendered as inoperable in certain cases, as is useful in accordance with a particular application. The embodiments of the present invention will now be described in detail with reference to the accompanying drawings. However, the disclosed invention is not limited to the present embodiments.

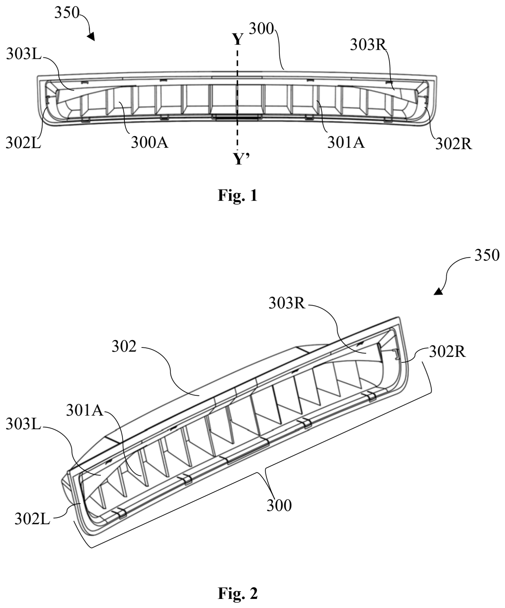

**Figures 1** - **3** are taken together for discussion. As shown in **Figures 1-3****,** an air guide assembly (350) for a vehicle (100) is provided. The air guide assembly

(350) comprises a cover body (302) and a guiding unit (300). The guiding unit (300) comprises a plurality of vanes (301A) and the guiding unit (300) is configured with the cover body (302) to define a plurality of air flow passages (300A) between the plurality of vanes (301A) and the cover body (302). The cover body (302) comprises one or more conduit portions (303L, 303R) extended to partially cover at least one of the plurality of flow passages (300A) to increase at least one of a speed and a pressure of an airflow through at least one partially covered passage of the plurality of air flow passages (300A).

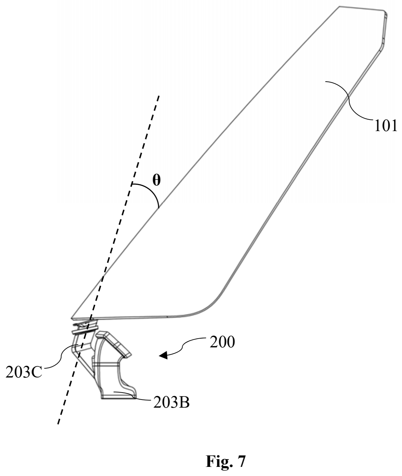

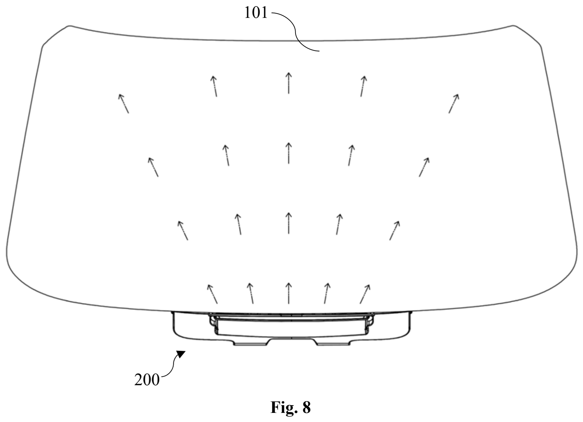

The cover body (302) is configured to incline the guiding unit (300) at a predefined angle (θ) with respect to at least one windscreen (101) (as shown in **Figures 7** and **8****).** In one embodiment of the present disclosure the predefined angle (θ) is in a range of 12° to 28°. As per an advantage of the present disclosure, the predefined angle (θ) ensures that the air impacts the at least one windscreen (101) at an optimal direction. This enhances the heat transfer required to effectively evaporate the fog or mist accumulated on the at least one windscreen (101). By directing the warm air at the predefined angle (θ), the cover body (302) maximizes coverage across the critical areas of the at least one windscreen (101). So, that a user of the vehicle (100) can rely on it for clear visibility.

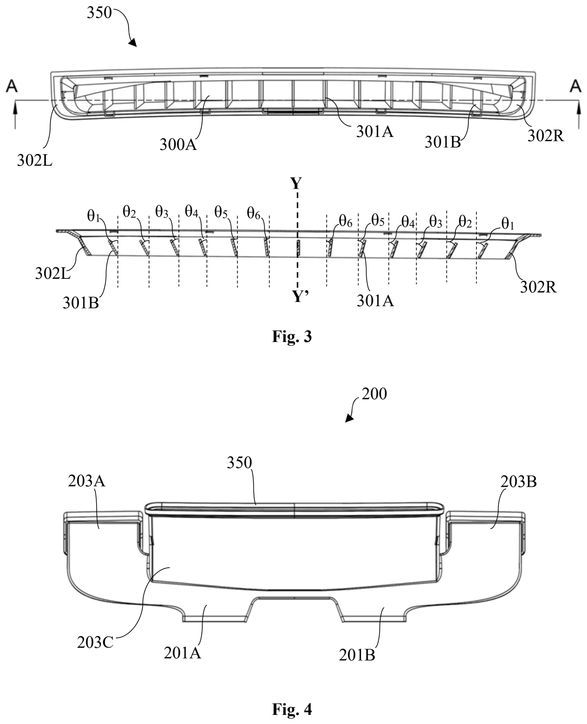

As shown in **Figure 3****,** the plurality of vanes (301A) is disposed inside the cover body (302) and each vane of the plurality of vanes (301A) is configured at a predefined angle of inclination (θ₁, θ₂, ... θₙ) with respect to a mounting axis of the respective vane. The mounting axis passes through abutting region between the respective vane and the cover body (302). The mounting axis is orthogonal to base wall (302A) of the cover body (302) and the predefined angle of inclination (θ₁, θ₂, ... θₙ) is in a range of 4° to 36°.

The plurality of vanes (301A) are configured to direct the airflow toward the at least one windscreen (101). The plurality of vanes (301A) comprises a predefined angular profile relative to a central axis (Y-Y') of the cover body (302) to optimize the airflow toward the at least one windscreen (101). The central axis (Y-Y') is configured to pass through the origin of each vane of the plurality of vanes (301A) of the guiding unit (300) respectively. This ensures a clear visibility for a user of the vehicle (100), especially during conditions where fog or mist forms on the at least one windscreen (101). The cover body (302) is disposed within a dashboard of the vehicle (100), while the plurality of vanes (301A) allows for targeted distribution of the airflow across the at least one windscreen (101), focusing on areas that are most critical for visibility.

The plurality of vanes (301A) is integrated with the cover body (302) and the predefined angular profile of the plurality of vanes (301A) is a predefined angle of inclination (θ₁, θ₂, ... θₙ) of each of the plurality of vanes (301A) with the central axis (Y-Y') and the predefined angle of inclination (θ₁, θ₂, ... θₙ) is in a range of 4° to 36°. As per an advantage of the present disclosure, the predefined angle of inclination (θ₁, θ₂, ... θₙ) of each vane of the plurality of vanes (301A) is carefully configured to optimize the airflow distribution across the at least one windscreen (101), helping to clear fog or mist more quickly and uniformly. The fact that each vane of the plurality of vanes (301A) has its own predefined angle of inclination (θ₁, θ₂, ... θₙ) provides a unique air flow profile for each type of model of the vehicle which may have different design and curvature(s) of the windshield. This provides massive amount of design flexibility for the automotive designer to enable optimum demystification. Further the predefined angle of inclination (θ₁, θ₂, ... θₙ) allows the plurality of vanes (301A) to cover the entire area of the at least one windscreen (101) thereby allowing a single unit of the air guide assembly (350) to clear the at least one windscreen. This ensures that visibility is restored in a timely manner, while also contributing to overall energy efficiency by effectively managing air movement without unnecessary power consumption.

The cover body (302) comprises one or more side portions (302L, 302R). The cover body (302) is configured to vary in a width from the one or more side portions (302L, 302R) toward a central axis (Y-Y) of the guiding unit (300). The cover body (302) and the plurality of vanes (301A) converge the airflow toward one or more edges of the at least one windscreen (101). In one embodiment of the present disclosure, the cover body (302) has a progressive width increment for the last two to three slots. These slots are configured to increase from 30% to 50% of the maximum width value as they approach the edges of the cover body (302). As per an advantage of the present disclosure, the progressive widening of the cover body (302) ensures that the airflow is distributed more evenly across the at least one windscreen (101), especially at the outermost sections where air coverage tends to be weaker. The broader slots at the ends of the cover body (302) helps in maintaining sufficient air velocity and coverage, preventing blind spots where fog might persist.

In an embodiment of the present disclosure, the one or more conduit portions (303L, 303R) are configured to partially cover certain flow passages (300A) that are positioned closer to the side portions (302L, 302R). Accordingly, the same enhances the efficiency of the airflow directed towards the at least one windscreen (101) of the vehicle (100). By partially obstructing these select flow passages, the speed or pressure or both of the airflow is increased as it moves toward the at least one windscreen (101). This focused increase in airflow dynamics ensures effective demisting or defogging of the at least one windscreen (101). Therefore, the present disclosure achieves an optimal solution where a single air guide assembly (350) suffices to demist the entire windscreen (101), eliminating the need for multiple assemblies and thus streamlining the system while maintaining its effectiveness. Accordingly, the same contributes to cost and space efficiency in the overall vehicle (100).

As shown in **Figure 3****,** the cover body (302) and the plurality of vanes (301A) are configured to converge the airflow toward one or more edges of the at least one windscreen (101). The one or more side portions (302L, 302R) are parallel to at least one adjacent vane (301B) of the plurality of vanes (301A). As per an advantage of the present disclosure, the inclined configuration of the one or more side portions (302L, 302R) is configured to streamline the airflow, ensuring that it follows the intended path without unnecessary turbulence or noise. It helps in guiding the air smoothly toward the at least one windscreen (101), thereby further improving the efficiency of the demisting process while reducing any potential discomfort from excessive noise generated by high-speed airflow. This structural and architectural refinements collectively contribute to a more effective and user-friendly demisting system (200). In another embodiment of the present disclosure, a width of the one or more side portions (302L, 302R) and a width of the cover body (302) along the central axis (Y-Y') are in a ratio of 1:1.8 to 1:2.3.

As shown in **Figure 4****,** a demisting system (200) of a vehicle (100) is provided. The demisting system (200) comprises one or more inlets (201A, 201B), one or more conduits (203A, 203B, 203C) and an air guide assembly (350). The one or more inlets (201A, 201B) draw the air into the demisting system (200) and then further distribute it to the one or more conduits (203A, 203B, 203C). Thereafter, the one or more conduits (203A, 203B, 203C) direct an airflow toward a compartment of the vehicle (100) and at least one windscreen (101) of the vehicle (100).

The one or more conduits (203A, 203B, 203C) include a central conduit (203C). The central conduit (203C) is capable of receiving the air guide assembly (350). The air guide assembly (350) direct the airflow toward the at least one windscreen (101) of the vehicle (100). In another embodiment of the present disclosure, the air guide assembly (350) may be configured to direct the airflow toward different components of the vehicle (100) such as towards driver, a glove box, rear passenger cabin etc. The air guide assembly (350) comprises a cover body (302) and a guiding unit (300). The guiding unit (300) comprises a plurality of vanes (301A). The guiding unit (300) configured with the cover body (302) to define a plurality of air flow passages (300A, shown in **Figure 3****)** between the plurality of vanes (301A) and the cover body (302). The cover body (302) also comprises a base wall (302A).

The cover body (302) is configured to incline the guiding unit (300) at a predefined angle (θ) from the at least one windscreen (101). This ensures that air is drawn inside the vehicle (100) *via* the one or more inlets (201A, 201B) and is channeled directly onto the at least one windscreen (101) after passing through the one or more hearing elements (not shown). Since the temperature of the air is higher than that of the fog accumulated on the at least one windscreen (101), a heat transfer occurs. This heat transfer causes condensed moisture (fog or mist) to evaporate, effectively clearing the at least one windscreen (101) and restoring visibility.

For the demisting system (200) to perform efficiently, the airflow must be optimally distributed across the desired visibility zones of the at least one windscreen (101). Uniform distribution of the airflow ensures that the entire surface of the at least one windscreen (101) is cleared quickly and effectively, without leaving patches of fog that could obstruct the view of the user. In order to get the desired result, the cover body (302) comprises one or more conduit portions (303L, 303R) to increase a speed and a pressure of the airflow toward the at least one windscreen (101). As per an advantage of the above disclosure, the high-speed and high-pressure of the airflow enables the air to travel a greater distance, ensuring it reaches the far edges of the at least one windscreen (101) effectively.

Further, the plurality of vanes (301A) is disposed inside the cover body (302) and directs the airflow toward the at least one windscreen (101). The plurality of vanes (301A) comprises a predefined angular profile with respect to a central axis (Y-Y') of the guiding member to optimize the airflow toward the at least one windscreen (101). By optimizing the airflow, the guiding unit (300) addresses the challenge of providing uniform air distribution across the surface of the at least one windscreen (101), including its outermost edges.

In an embodiment of the present disclosure, each vane of the plurality of vanes (301A) is capable of being fixed at a predefined angle of inclination (θ₁, θ₂......θₙ) with respect to a mounting axis of each vane of the plurality of vanes (301A). This predefined angle of inclination (θ₁, θ₂......θₙ) is selected within a range of 4° to 36°, ensuring an optimal balance between airflow direction and pressure dynamics. This configuration allows the airflow to be guided towards the at least one windscreen (101) to achieve efficient demisting or defogging. By precisely fixing the vanes at these angles, the system achieves sufficient airflow distribution across the entire windscreen surface, enabling the use of a single air guide assembly (350) to effectively demist the entire area. This will eliminates the need for multiple assemblies and also simplifies the overall system configuration.

In an embodiment of the present disclosure, each vane of the plurality of vanes (301A) is capable of being adjusted at a predefined angle of inclination (θ₁, θ₂......θₙ) with respect to a mounting axis of each vane of the plurality of vanes (301A). The predefined angle of inclination (θ₁, θ₂......θₙ) is in a range of 4° to 36°. As per an advantage of the present disclosure, the variation in the predefined angle of inclination (θ₁, θ₂......θₙ) ensures that the airflow is properly directed to cover different portions of the at least one windscreen (101), maintaining consistent airflow distribution across its surface.

Further, the variety in the predefined angle of inclination (θ₁, θ₂......θₙ) allows for more precise control over how and where the air flows, preventing areas of the at least one windscreen (101) from being left demisted unevenly. Furthermore, this adjustable feature offers enhanced flexibility in controlling airflow dynamics, enabling customization to suit varying operational requirements or environmental conditions. The ability to adjust the vane angles further improves the efficiency and adaptability of the air guide assembly (350), ensuring optimal performance across diverse scenarios while retaining the advantage of using a single assembly for the entire windscreen.

The air guiding assembly (350) comprises one or more sensors and one or more blowers. The one or more sensors are configured to detect temperature, humidity and fogging on the at least one windscreen (101) of the vehicle (100). The one or more blowers are configured to draw the air through the one or more inlets (201A, 201B) and configured to direct the airflow toward the at least one windscreen (101) through the one or more conduits (203A, 203B, 203C). The demisting system (200) is configured to control a blowing speed of the one or more blowers and configured to adjust the predefined angle of inclination (θ₁, θ₂......θₙ) of the plurality of vanes (301A) based on one or more inputs received from the one or more sensors.

As per an advantage of the above disclosure, the one or more sensors could automatically adjust the blowing speed of the one or more blowers and the predefined angle of inclination (θ₁, θ₂, ... θₙ) to optimize the demisting process based on real-time conditions. This would make the demisting system (200) highly intelligent and self-regulating, enhancing both energy efficiency and user convenience by reducing the need for manual adjustments. The demisting system (200) could even be integrated with the climate control system of the vehicle (100) to maintain optimal cabin temperature and visibility simultaneously.

In one embodiment of the present disclosure, the plurality of vanes (301A) inside the cover body (302) could be adjustable or motorized, allowing them to change the predefined angle of inclination (θ₁, θ₂......θₙ) depending on the specific airflow needs at any given moment. As per an advantage of the present disclosure, in extreme weather conditions, the plurality of vanes (301A) could adjust to provide a stronger or more focused air stream toward areas of the at least one windscreen (101) that are more prone to fogging. This dynamic control would not only improve the efficiency of demisting but also provide a more personalized and adaptable experience for the user of the vehicle (100).

The central conduit (203C) is configured to be integrated with one or more airflow outlets to direct the airflow toward the at least one windscreen (101) of the vehicle (100) based on a fogging intensity. As per an advantage of the present disclosure, the demisting system (200) is connected with the one or more airflow outlets where different sections of the at least one windscreen (101) receive targeted airflow based on fogging intensity. The central conduit (203C) could be configured with multiple compartments, each directing air to specific zones of the at least one windscreen (101). This approach would ensure that areas with higher fogging are prioritized, reducing the time needed to clear the at least one windscreen (101) while conserving energy by not over-drying other parts.

Further, the one or more conduits (203A, 203B, 203C) comprise a modular configuration. As per an advantage of the present disclosure, the modular configuration of the one or more conduits (203A, 203B, 203C) allows the cover body (302) and the plurality of vanes (301A) to be customized for the vehicle (100) with very limited dashboard space, making the demisting system (200) adaptable to a wider range of vehicle models, including smaller electric vehicles and compact vehicles. The compact nature of this embodiment would ensure that the demisting system (200) remains effective even in vehicles with constrained of interior designs, while maintaining performance in demisting and defrosting.

As per an advantage of the present disclosure, air conditioning, demisting system (200) is an integrated assembly consisting of the one or more inlets (201A, 201B), the one or more conduits (203A, 203B, 203C) and the air guiding assembly (350) configured to manage both cabin temperature and windscreen clarity of the vehicle (100). The integrated assembly ensures passenger comfort and maintains clear visibility in adverse weather conditions by efficiently managing airflow across the interior of the vehicle (100) and the at least one windscreen (101).

As per another advantage of the present disclosure, the air guiding assembly (350) minimizes pressure loss, which allows the use of the one or more blowers of a lower capacity. This reduction in the power of the one or more blowers leads to lower energy consumption, contributing to improved fuel efficiency or, in the case of electric vehicles, extending battery life. The efficient utilization of energy makes this system eco-friendly and cost-effective for vehicle manufacturers and users alike, reducing both operating costs and environmental impact.

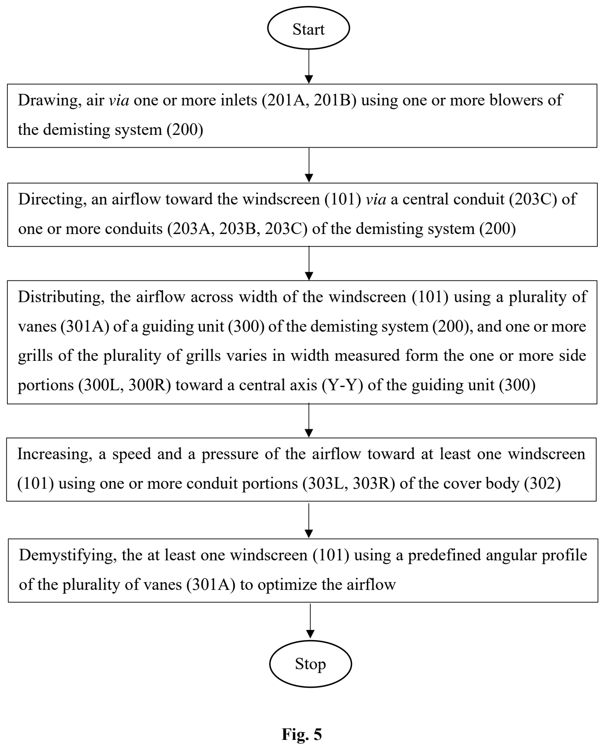

As shown in **Figure 5****,** a method (500) of demystifying at least one windscreen (101) of a vehicle (100) using a demisting system (200) is provided. The method (500) comprises plurality of steps. At step (501) draws air *via* one or more inlets (201A, 201B) using one or more blowers of the demisting system (200). At step (503) directs an airflow toward the at least one windscreen (101), after passing through the one or more hearing elements (not shown), *via* a central conduit (203C) of one or more conduits (203A, 203B, 203C) of the demisting system (200). As the warm air from the central conduit (203) is blown onto the at least one windscreen (101), it supplies the necessary heat to raise the temperature. This temperature increase also raises the temperature of the fog or mist layer accumulated on the at least one windscreen (101), bringing it to a threshold at which the fog begins to evaporate. The demisting system (200) then continues to supply the heat needed for the complete vaporization of the fog, effectively clearing the field of vision of the user and ensures safe driving conditions.

At step (505) distributes the airflow across width of the at least one windscreen (101) using a plurality of vanes (301A) of a guide unit (300) of the demisting system (200), where the plurality of vanes (301A) is disposed in a cover body (302). At step (505A) increases a speed and a pressure of the airflow toward at least one windscreen (101) using one or more conduit portions (303L, 303R) of the cover body (302). At step (507) demystify, the at least one windscreen (101) using a predefined angular profile of the plurality of vanes (301A) to optimize the airflow. As per an advantage of the present disclosure, the demisting system (200) excels in efficiently distributing air across the at least one windscreen (101), ensuring that even the wider areas of the at least one windscreen (101) are covered, preventing uneven clearing or persistent fogging at its edges. Further, the demisting system (200) also takes into account the limited space available on dashboard of the vehicle (100), utilizing compact configuration of the cover body (302) that allow for effective airflow distribution without consuming too much space. This compact configuration ensures that the dashboard remains functional and aesthetically pleasing while still providing optimal performance in demisting and defrosting the at least one windscreen (101).

At step (503A) directs the airflow toward the at least one windscreen (101) *via* the central conduit (203C) at a predefined angle (θ) measured from the at least one windscreen (101), wherein the predefined angle (θ) is in a range of 12° to 28°. As per an advantage of the present disclosure, the present demisting system (200) eliminates the need for multiple cover body (302), reducing the complexity and optimizing the use of the dashboard space. Additionally, the reduced number of components can also lead to cost savings in production and maintenance, without compromising the effectiveness of the demisting process. The central grill solution provides a streamlined and efficient way to meet the visibility needs of vehicle users, ensuring a clear windshield even with limited installation space.

Further, despite using only one central conduit (203C), the demisting system (200) is configured to distribute air effectively across the entire surface of the at least one windscreen (101), more specifically, towards desired visibility zones of the at least one windscreen (101). The desired visibility zones of the at least one windscreen (101) refer to the specific areas that must remain clear to ensure safe and unobstructed visibility for the driver. These zones include the primary visibility zone, directly in front of the driver, which is critical for observing the road, traffic, and pedestrians. The configuration of the cover body (302) and the plurality of vanes (301A) ensure that the warm air reaches both the center and edges of the at least one windscreen (101), providing uniform demisting coverage.

At step (509) adjusts a predefined angle of inclination (θ₁, θ₂......θₙ) of the plurality of vanes (301A) to direct the airflow toward fog accumulated on the at least one windscreen (101). At step (511) detects temperature, humidity and fogging of the at least one windscreen (101) of the vehicle (100) *via* one or more sensors of the demisting system (200). At step (513) directs the airflow toward the at least one windscreen (101) through the one or more conduits (203A, 203B, 203C) using one or more blowers of the demisting system (200). At step (515) controls a blowing speed of the one or more blowers and a predefined angle of inclination (θ₁, θ₂, ... θₙ) of the plurality of vanes (301A) based on one or more inputs received from the one or more sensors.

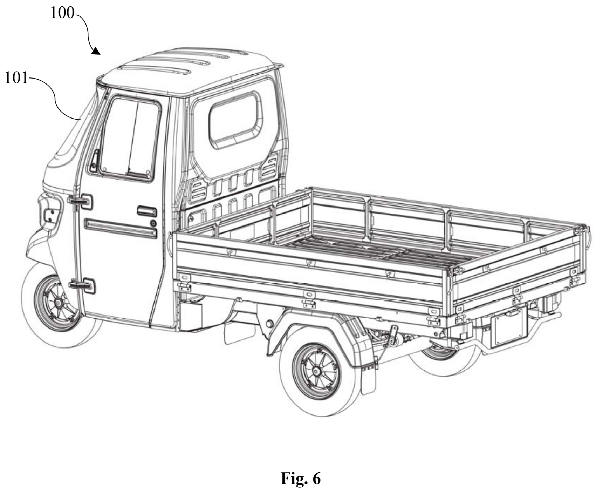

**Figures 6 - 8** are taken together for discussion. As shown in **Figure 6** a vehicle (100) is provided. In one embodiment of the present invention the vehicle (100) may include but is not limited to a three-wheeled vehicle, a four-wheeled vehicle or a multi-wheeled vehicle etc. In another embodiment of the present disclosure, the vehicle (100) may be a closed cabin vehicle or an open cabin vehicle. The vehicle (100) comprises at least one windscreen (101) and a demisting system (200). The demisting system (200) being configured to remove a mist accumulated on the at least one windscreen (100). The demisting system (200) comprises one or more inlets (201A, 201B), one or more conduits (203A, 203B, 203C), and an air guide assembly (350). The one or more inlets (201A, 201B) are configured to draw air into the demisting system (200). The one or more conduits (203A, 203B, 203C) are configured to direct an airflow toward a vehicle compartment and the at least one windscreen (101) as shown in **Figure 7** and **8****.**

The air guide assembly (350) to direct the airflow toward the at least one windscreen (101) of the vehicle (100). The air guide assembly (350) is disposed in a central conduit (203C) of the one or more conduits (203A, 203B, 203C). The air guide assembly (350) comprises a cover body (302) and a guiding unit (300). The guiding unit (300) comprises a plurality of vanes (301A) and the guiding unit (300) is configured with the cover body (302) to define a plurality of air flow passages (300A) between the plurality of vanes (301A) and the cover body (302). The cover body (302) comprises one or more conduit portions (303L, 303R) extended to partially cover at least one of the plurality of flow passages (300A) to increase at least one of a speed and a pressure of an airflow through at least one partially covered passage of the plurality of air flow passages (300A).

As per an advantage of the present disclosure, the air guide assembly (350) save space as a single unit of the air guide assembly (350) is sufficient to demist the entire windscreen. This eliminates the need air guide assembly (350), thereby reducing the complexity of the demisting system (200) and optimizing the use of a dashboard space in the vehicle (100). This not only simplifies the construction of the demisting system (200) but also offers better space utilization, making it ideal for the vehicle (100) having a restricted dashboard space.

Further, by eliminating the need for additional air guide assembly (350), the demisting system (200) maintains the vehicle's interior aesthetics while enhancing functional performance. Additionally, the reduced number of components can also lead to cost savings in production and maintenance, without compromising the effectiveness of the demisting process.

As per another advantage of the present disclosure, the central conduit (203C) provides a streamlined and efficient way to meet the visibility needs of the user of the vehicle (100) and ensures the at least one windshield remains clean even with limited installation space for the guiding unit (300).

As per an advantage of the present disclosure, the demisting system (200) enhances user comfort and convenience. The guiding unit (300) optimizes the airflow and reduces noise generated by high-speed air passing through the cover body (302) and the plurality of vanes (301A). This minimizes the discomfort that can arise from loud cabin noises. Additionally, the demisting system (200) ensures a smooth and controlled distribution of air, which avoids sudden blasts of cold or hot air that can be uncomfortable for passengers.

As per another advantage of the present disclosure, the demisting system (200) is highly adaptable and scalable, making it suitable for a wide range of vehicle models, from small cars to larger commercial vehicles. The versatility of the demisting system (200) allows it to be customized based on the specific requirements of different vehicle types, without compromising on performance or efficiency.

According to the above disclosure, the present invention provides various advantages. In a preferred embodiment, the predefined angle of inclination (θ₁, θ₂......θₙ) of each of the plurality of vanes (301A) helps in clearing fog or mist more quickly and uniformly. Thereby ensuring that visibility is restored in a timely manner and contributing to overall energy efficiency by effectively managing air movement without unnecessary power consumption.

The one or more conduit portions (303L, 303R) allows the high-speed and high-pressure of the airflow to travel a greater distance, ensuring it reaches the far edges of the at least one windscreen (101) effectively. Thereby provides a uniform air distribution across the surface of the at least one windscreen (101), including its outermost edges.

The predefined angle (θ) directs the air at an optimal direction on to the at least one windscreen (101) for enhancing the heat transfer required to effectively evaporate the fog or mist accumulated on the at least one windscreen (101).

The progressive widening of the cover body (302) ensures that the airflow is distributed more evenly across the at least one windscreen (101) and helps in maintaining sufficient air velocity and coverage, preventing blind spots where fog might persist.

The inclined configuration of the one or more side portions (302L, 302R) to streamlines thereby further improving the efficiency of the demisting process while reducing any potential discomfort from excessive noise generated by high-speed airflow.

The variation in the predefined angle of inclination (θ₁, θ₂......θₙ) ensures that the airflow is properly directed to cover different portions of the at least one windscreen (101), maintaining consistent airflow distribution across its surface. Further, it allows for more precise control over how and where the air flows, preventing areas of the at least one windscreen (101) from being left demisted unevenly.

In one embodiment of the present disclosure, the air conditioning, demisting system (200) is an integrated assembly consisting of the one or more inlets (201A, 201B), the one or more conduits (203A, 203B, 203C) and the air guide assembly (350) this integrated assembly ensures passenger comfort and maintains clear visibility in adverse weather conditions by efficiently managing airflow across the interior of the vehicle (100) and the at least one windscreen (101).

The demisting system (200) ensures that even the wider areas of the at least one windscreen (101) are covered, preventing uneven clearing or persistent fogging at its edges.

The demisting system (200) also takes into account the limited space and ensures that the dashboard of the vehicle (100) remains functional and aesthetically pleasing while still providing optimal performance in demisting and defrosting the at least one windscreen (101).

The present demisting system (200) eliminates the need for multiple cover body (302), reducing the complexity and optimizing the use of the dashboard space.

The plurality of vanes (301A) could be adjusted to provide a stronger or more focused air stream toward areas of the at least one windscreen (101) that are more prone to fogging. This improves the efficiency of demisting and also provide a more personalized and adaptable experience for the user of the vehicle (100).

The central conduit (203C) could be configured with multiple compartments. This would ensure that areas with higher fogging are prioritized, reducing the time needed to clear the at least one windscreen (101) while conserving energy by not over-drying other parts.

The modular configuration of the one or more conduits (203A, 203B, 203C) allows the cover body (302) and the plurality of vanes (301A) and make them adaptable to a wider range of vehicle models, including smaller electric vehicles and compact vehicles.

The guiding unit (300) minimizes pressure loss, which allows the use of the one or more blowers of a lower capacity. This reduction in the power of the one or more blowers leads to lower energy consumption, contributes to fuel efficiency or, in the case of electric vehicles, extends battery life. This makes the demisting system (200) eco-friendly and cost-effective for vehicle manufacturers and users alike, reducing both operating costs and environmental impact.

The air guide assembly (350) optimizes the airflow and reduces noise generated by high-speed air and minimizes the discomfort arise from loud cabin noises.

The demisting system (200) ensures a smooth and controlled distribution of air.

The demisting system (200) is highly adaptable and scalable, thereby suitable for a wide range of vehicle models, from small cars to larger commercial vehicles.

The air guide assembly (350) reduces the complexity of the demisting system (200) and optimizing the use of a dashboard space in the vehicle (100) and offers better space utilization.

The central conduit (203C) enable the visibility needs of the user of the vehicle (100) and ensures the at least one windshield remains clean.

While the present invention has been shown and described with reference to the foregoing preferred embodiments, it will be apparent to those skilled in the art that changes in form, connection, and detail may be made therein without departing from the scope of the invention.

This written description uses examples to provide details on the disclosure, including the best mode, and also to enable any person skilled in the art to practice the disclosure, including making and using any devices or systems and performing any incorporated methods. The patentable scope of the disclosure is defined by the claims and may include other examples that occur to those skilled in the art. Such other examples are intended to be within the scope of the claims if they have structural elements that do not differ from the literal language of the claims, or if they include equivalent structural elements with insubstantial differences from the literal language of the claims.

It is to be understood that the aspects of the embodiments are not necessarily limited to the features described herein. Many modifications and variations of the present subject matter are possible in light of the above disclosure.

### LIST OF REFERENCES

| **Reference Numeral** | **Meaning** |
|---|---|
| **100** | A vehicle |
| **101** | At least one windscreen |
| **200** | A demisting system |
| **201A, 201B** | One or more inlets |
| **203A, 203B, 203C** | One or more conduits |
| **203C** | A central conduit |
| **350** | An air guide assembly |
| **300** | A guiding unit |
| **300A** | A plurality of air flow passages |
| **301A** | A plurality of vanes |
| **301B** | At least one vane of the plurality of vanes |
| **302** | A cover body |
| **303L, 303R** | One or more conduits portions |
| **500** | A method of demystifying at least one windscreen of a vehicle |
| **501** | A first step of a method of demystifying at least one windscreen of a vehicle |
| **503** | A second step of a method of demystifying at least one windscreen of a vehicle |
| **505** | A third step of a method of demystifying at least one windscreen of a vehicle |
| **505A** | A fourth step of a method of demystifying at least one windscreen of a vehicle |
| **507** | A fifth step of a method of demystifying at least one windscreen of a vehicle |
| **503A** | A sixth step of a method of demystifying at least one windscreen of a vehicle |
| **509** | A seventh step of a method of demystifying at least one windscreen of a vehicle |
| **511** | An eight step of a method of demystifying at least one windscreen of a vehicle |
| **513** | A ninth step of a method of demystifying at least one windscreen of a vehicle |
| **515** | A tenth step of a method of demystifying at least one windscreen of a vehicle |
| **θ** | A predefined angle |
| **θ₁, θ₂ ......θₙ** | A predefined angle of inclination |
| **Y-Y'** | A central axis of the guiding member |

## Claims

1. An air guide assembly (350) for a vehicle (100), the air guide assembly (350) comprising:
a cover body (302);
a guiding unit (300), the guiding unit (300) comprising a plurality of vanes (301A), and the guiding unit (300) being configured with the cover body (302) to define a plurality of air flow passages (300A) between the plurality of vanes (301A) and the cover body (302), and
the cover body (302) comprising one or more conduit portions (303L, 303R), the one or more conduit portions (303L, 303R) extending to partially cover at least one of the plurality of flow passages (300A) to increase at least one of a speed and a pressure of an airflow through at least one partially covered passage of the plurality of air flow passages (300A).

2. The air guide assembly (350) as claimed in claim 1, wherein the cover body (302) being configured to incline the guiding member (300) at a predefined angle (θ) from at least one windscreen (101) of the vehicle (100), wherein the predefined angle (θ) is in a range of 12° to 28°.

3. The air guide assembly (350) as claimed in claim 1 wherein the plurality of vanes (301A) being disposed inside the cover body (302), and
each vane of the plurality of vanes (301A) being configured at a predefined angle of inclination (θ₁, θ₂, ... θₙ) with respect to a mounting axis of the respective vane,
wherein the mounting axis being passing through abutting region between the respective vane and the cover body (302) and orthogonal to a base wall (302A) of the cover body (302), and the predefined angle of inclination (θ₁, θ₂, ... θₙ) is in a range of 4° to 36°.

4. The air guide assembly (350) as claimed in claim 1, wherein the plurality of vanes (301A) comprises a predefined angular profile relative to a central axis (Y-Y') of the cover body (302),
the central axis (Y-Y') being configured to pass through the origin of each vane of the plurality of vanes (301A) of the guiding unit (300) respectively; and
the plurality of vanes (301A) being configured to direct the airflow toward the at least one windscreen (101).

5. The air guide assembly (350) as claimed in claim 1, wherein the cover body (302) comprises one or more side portions (302L, 302R);
the cover body (302) being configured to vary in a width from the one or more side portions (302L, 302R) toward a central axis (Y-Y) of the guiding unit (300), and
the cover body (302) and the plurality of vanes (301A) being configured to converge the airflow toward one or more edges of the at least one windscreen (101).

6. The air guide assembly (350) as claimed in claim 5, wherein at least one vane (301B) of the plurality of vanes (301A) being mounted adjacent to the one or more side portions (302L, 302R) of the cover body (302) and the one or more conduit portions (303L, 303R).

7. The air guide assembly (350) as claimed in claim 5, wherein the width of the one or more side portions (302L, 302R) and a width of the cover body (302) along the central axis (Y-Y') being in a ratio of 1:1.8 to 1:2.3.

8. A demisting system (200) of a vehicle (100), the demisting system (200) comprising:
one or more inlets (201A, 201B), the one or more inlets (201A, 201B) being configured to draw air into the demisting system (200);
one or more conduits (203A, 203B, 203C), the one or more conduits (203A, 203B, 203C) being configured to direct an airflow toward a compartment of the vehicle (100) and at least one windscreen (101) of the vehicle (100); and
an air guide assembly (350), the air guide assembly (350) being configured to direct the airflow toward the at least one windscreen (101) of the vehicle (100), the air guide assembly (350) being disposed in a central conduit (203C) of the one or more conduits (203A, 203B, 203C) and the air guide assembly (300) comprising:
a cover body (302);
a guiding unit (300), the guiding unit (300) comprising a plurality of vanes (301A), the guiding unit (300) configured with the cover body (302) to define a plurality of air flow passages (300A) between the plurality of vanes (301A) and the cover body (302),
wherein the cover body (302) comprises one or more conduit portions (303L, 303R), the one or more conduit portions (303L, 303R) being extended to partially cover at least one of the plurality of flow passages (300A) to increase at least one of a speed and a pressure of an airflow through at least one partially covered passage of the plurality of air flow passages (300A).

9. The demisting system (200) as claimed in claim 8, wherein each vane of the plurality of vanes (301A) being configured to be adjusted at a predefined angle of inclination (θ₁, θ₂......θₙ) with respect to a mounting axis of each vane of the plurality of vanes (301A) wherein the predefined angle of inclination (θ₁, θ₂......θₙ) being in a range of 4° to 36°.

10. The demisting system (200) as claimed in claim 8, wherein the air guiding assembly (350) comprises:
one or more sensors, the one or more sensors being configured to detect temperature, humidity and fogging on the at least one windscreen (101) of the vehicle (100);
one or more blowers, the one or more blowers being configured to draw the air through the one or more inlets (201A, 201B) and configured to direct the airflow toward the at least one windscreen (101) through the one or more conduits (203A, 203B, 203C); and
the demisting system (200) being configured to control a blowing speed of the one or more blowers and configured to adjust the predefined angle of inclination (θ₁, θ₂......θₙ) of each vane of the plurality of vanes (301A) based on one or more inputs received from the one or more sensors.

11. The demisting system (200) as claimed in claim 8, wherein the central conduit (203C) being configured to be integrated with one or more airflow outlets to direct the airflow toward the at least one windscreen (101) of the vehicle (100) based on a fogging intensity.

12. The demisting system (200) as claimed in claim 8, wherein the one or more conduits (203A, 203B, 203C) comprise a modular configuration.

13. A method (500) of demystifying at least one windscreen (101) of a vehicle (100) using a demisting system (200), the method (500) comprises steps of:
drawing (501) air *via* one or more inlets (201A, 201B) using one or more blowers of the demisting system (200);
directing (503) an airflow toward the at least one windscreen (101) *via* a central conduit (203C) of one or more conduits (203A, 203B, 203C) of the demisting system (200);
distributing (505), the airflow across width of the at least one windscreen (101) using a plurality of vanes (301A) of a guiding unit (300) of the demisting system (200), the plurality of vanes (301A) being disposed in a cover body (302);
increasing (505A), a speed and a pressure of the airflow toward at least one windscreen (101) using one or more conduit portions (303L, 303R) of the cover body (302); and
demystifying (507), the at least one windscreen (101) using a predefined angular profile of the plurality of vanes (301A) to optimize the airflow.

14. The method (500) as claimed in claim 13, wherein the method comprises steps of:
directing (503A), the airflow toward the at least one windscreen (101) *via* the central conduit (203C) at a predefined angle (θ) measured from the at least one windscreen (101), the predefined angle (θ) is in a range of 12° to 28°; and
adjusting (509), a predefined angle of inclination (θ₁, θ₂......θₙ) of the plurality of vanes (301A) to direct the airflow toward fog accumulated on the at least one windscreen (101), the predefined angle of inclination (θ₁, θ₂......θₙ) is in a range of range of 4° to 36°.

15. The method (500) as claimed in claim 13, wherein the method comprises steps of:
detecting (511), temperature, humidity and fogging of the at least one windscreen (101) of the vehicle (100) *via* one or more sensors of the demisting system (200);
directing (513), the airflow toward the at least one windscreen (101) through the one or more conduits (203A, 203B, 203C) using one or more blowers of the demisting system (200); and
controlling (515), a blowing speed of the one or more blowers and a predefined angle of inclination (θ₁, θ₂......θₙ) of the plurality of vanes (301A) based on one or more inputs received from the one or more sensors.

16. A vehicle (100), the vehicle (100) comprising:
at least one windscreen (101),
a demisting system (200), the demisting system (200) being configured to remove a mist accumulated on the at least one windscreen (100), and the demisting system (200) comprising:
one or more inlets (201A, 201B), the one or more inlets (201A, 201B) being configured to draw air into the demisting system (200);
one or more conduits (203A, 203B, 203C), the one or more conduits (203A, 203B, 203C) being configured to direct an airflow toward a vehicle compartment and the at least one windscreen (101); and
an air guide assembly (350) to direct the airflow toward the at least one windscreen (101) of the vehicle (100), the air guide assembly (350) being disposed in a central conduit (203C) of the one or more conduits (203A, 203B, 203C) and the air guide assembly (300) comprising:
a cover body (302);
a guiding unit (300), the guiding unit (300) comprising a plurality of vanes (301A), the guiding unit (300) configured with the cover body (302) to define a plurality of air flow passages (300A) between the plurality of vanes (301A) and the cover body (302),
wherein the cover body (302) comprises one or more conduit portions (303L, 303R), the one or more conduit portions (303L, 303R) being extended to partially cover at least one of the plurality of flow passages (300A) to increase at least one of a speed and a pressure of an airflow through at least one partially covered passage of the plurality of air flow passages (300A).
